# FASCICULE DE BREVET EUROPEEN

(11) **EP 1 195 500 B1**
(45) Date de publication et mention de la délivrance du brevet: **23.08.2006**
(21) Numéro de dépôt: 01402573.8
(22) Date de dépôt: 05.10.2001
(51) Int. Cl.: F01N 3/20, F01N 3/22

(54) **Procédé et dispositif d'amorcage d'un catalyseur**
Verfahren und Vorrichtung zum Aktivieren eines Katalysators
Process and device for lighting off a catalyst

(30) Priorité: 05.10.2000 FR 0012710
(43) Date de publication de la demande: 10.04.2002
(73) Titulaire: Renault s.a.s., 92100 Boulogne Billancourt (FR)
(72) Inventeur: Thaveau, Christophe, 45300 Sermaises (FR)

(56) Documents cités:
- DE-A- 19 646 151
- DE-C- 19 731 739
- GB-A- 2 340 054
- US-A- 5 388 402
- US-A- 5 390 488
- US-A- 5 456 063
- US-A- 5 493 858
- US-A- 5 519 992
- US-A- 5 666 804
- US-A- 5 675 968

## Description

L'invention concerne un procédé d'amorçage d'un catalyseur de traitement des gaz d'échappement.

L'invention concerne plus particulièrement un procédé d'amorçage d'un catalyseur de traitement des gaz d'échappement d'un moteur à combustion.

L'invention concerne aussi un dispositif d'amorçage d'un catalyseur de traitement des gaz d'échappement d'un moteur à combustion, notamment d'un moteur d'un véhicule automobile.

Les moteurs à combustion interne permettent de transformer en énergie mécanique l'énergie issue de la combustion d'un mélange air/carburant. Si le mélange initial est dosé selon le rapport stoechiométrique théorique, c'est-à-dire 1 gramme de carburant pour 14,7 grammes d'air, les produits issus de la combustion sont du dioxyde de carbone (CO₂) et de l'eau (H₂O).

Toutefois, dans certaines phases de fonctionnement du moteur, le mélange carburé peut être riche, c'est-à-dire comporter un excès de carburant, ou pauvre, c'est-à-dire comporter un excès d'air.

Dans le cas d'un mélange riche, il apparaît dans les produits issus de la combustion, en plus de l'eau et du dioxyde de carbone, des molécules réductrices telles que des hydrocarbures (HC), du monoxyde de carbone (CO) et de l'hydrogène (H₂).

Dans le cas d'un mélange pauvre, il y a apparition dans les gaz d'échappement de molécules oxydantes telles que des oxydes d'azote (NOx), et de l'oxygène (O₂).

Pour limiter la production de ces substances polluantes, il est donc nécessaire que le moteur fonctionne le plus souvent possible en brûlant un mélange dosé selon les proportions stoechiométriques, mais cela n'est pas toujours possible, ni même souhaitable.

En effet, lorsque le moteur est froid ou lorsque l'on désire obtenir une puissance maximale, par exemple au cours d'une accélération du véhicule, il est nécessaire de faire fonctionner le moteur avec un mélange riche.

Au contraire, lors des phases de décélération ou lorsque le besoin de puissance est faible, on a intérêt à faire fonctionner le moteur à l'aide d'un mélange pauvre pour réduire la consommation de carburant.

Depuis plusieurs années déjà, des normes de dépollution imposent de munir les véhicules automobiles d'un dispositif catalytique, ou catalyseur, destiné à traiter chimiquement les gaz d'échappement pour les débarrasser de la majeure partie des substances polluantes qu'ils contiennent.

Les dispositifs catalytiques généralement utilisés ont pour première fonction d'achever la combustion du mélange carburé qui n'est qu'incomplète à l'intérieur du moteur. Il s'agit alors de regrouper sur des sites catalytiques des molécules oxydantes et des molécules réductrices, telles que le monoxyde de carbone, présentes dans les gaz d'échappement pour qu'elles se combinent afin de produire de l'eau et du dioxyde de carbone. Ces sites sont formés sur un support, appelé monolithe, qui est une structure poreuse présentant une grande superficie de contact avec les gaz d'échappement traversant le pot, et qui est revêtue de diverses substances chimiques ayant des propriétés catalytiques.

Afin de favoriser les réactions d'oxydation, il est connu injecter de l'air en amont du catalyseur.

La capacité du catalyseur à oxyder le monoxyde de carbone croit au fur et à mesure que sa température augmente.

Or, au démarrage du moteur, le catalyseur d'oxydation est froid et ne permet pas d'oxyder le monoxyde de carbone.

Ainsi entre le démarrage du moteur l'instant auquel le catalyseur est amorcé, c'est-à-dire qu'il oxyde la quasi-totalité du monoxyde de carbone qui le traverse, une grande quantité de substances polluantes, notamment de monoxyde de carbone, est rejetée par atmosphère. Cette quantité est d'autant plus grande qu'au démarrage, le moteur fonctionne nécessairement avec un mélange riche. Le catalyseur est amorcé lorsque sa température est supérieure à une température d'amorçage.

Dans le but de diminuer la durée d'amorçage du catalyseur, et ainsi la quantité de substances polluantes rejetée dans l'atmosphère, il existe des procédés d'aide à l'amorçage par injection d'un débit d'air sensiblement constant à l'échappement. En effet, l'apport d'oxygène présent dans l'air permet de favoriser la réaction d'oxydation du monoxyde de carbone. Or cette réaction d'oxydation est exothermique lorsqu'elle se produit à une température supérieure à une température de seuil prédéterminée.

Ainsi, le catalyseur présente deux températures caractéristiques. La première est la température de seuil à partir de laquelle la réaction d'oxydation du monoxyde de carbone est exothermique, et la seconde correspond à la température d'amorçage à partir de laquelle le catalyseur peut oxyder la quasi-totalité du monoxyde de carbone qui le traverse.

Plusieurs stratégies d'aide à l'amorçage connues peuvent être utilisées.

Il est possible d'injecter de l'air dés le démarrage du moteur pour maintenir le catalyseur en milieu oxydant. Cependant, lorsque l'efficacité du catalyseur est faible, une quantité importante de l'air injecté ne participe pas à l'oxydation des substances polluantes. L'air injecté étant plus froid que les gaz d'échappement, ladite quantité importante refroidit inutilement les gaz d'échappement et elle retarde la montée en température du catalyseur.

Il est aussi possible d'injecter un débit d'air déterminé (qui permet l'oxydation de la quasi-totalité du monoxyde de carbone lorsque le catalyseur est amorcé) lorsque le catalyseur est à une température supérieure à la température de seuil, de façon à minimiser la durée de la montée en température entre la température de seuil et la seconde température caractéristique. Ensuite il existe une alternative.

Soit la richesse du moteur peut être augmentée progressivement et proportionnellement à l'évolution de l'efficacité du catalyseur, de façon que le catalyseur puisse oxyder le monoxyde de carbone produit. Dans ce cas, l'air en excès qui ne participe pas à la réaction d'oxydation et ralentit sa montée en température jusqu'à la température d'amorçage.

Soit il n'y a pas de stratégie d'augmentation du monoxyde de carbone et, dans ce cas, une partie importante de celui-ci traverse le catalyseur sans y être oxydée, les conditions de fonctionnement de ce dernier, notamment sa température, ne permettant qu'une oxydation partielle de la quantité du monoxyde de carbone produit par le moteur. Ainsi; une quantité importante de monoxyde de carbone est rejetée dans l'atmosphère.

Une autre stratégie d'aide à l'amorçage consiste à injecter l'air lorsque le catalyseur a atteint sa température d'amorçage Dans ce cas, entre le démarrage du moteur et le début de l'injection d'air en amont du catalyseur, une grande quantité de monoxyde de carbone a aussi été rejetée dans l'atmosphère.

Il est aussi connu de chauffer l'air injecté par un dispositif additionnel de chauffage. Cependant, un tel dispositif est coûteux en énergie. De plus, il est nécessaire de trouver un compromis entre un débit faible qui permet une bonne efficacité du dispositif de chauffage mais qui diminue la possibilité de chauffage du catalyseur par la réaction exothermique d'oxydation du monoxyde de carbone, et un débit plus important qui permet un chauffage important du catalyseur par la réaction exothermique mais qui diminue l'efficacité du dispositif de chauffage.

Par la publication US 56 75 968, il est connu d'optimiser la montée en température d'un catalyseur en faisant varier de façon appropriée le débit d'air injecté en amont de celui-ci.

**US-A-5 675 968** divulgue un dispositif d'amorçage d'un catalyseur du type qui est agencé dans une tubulure d'échappement, qui débouche dans la tubulure d'échappement en amont du catalyseur et qui comporte un circuit d'injection d'air dans lequel sont agencés successivement une pompe à air qui est activée au début de la phase d'amorçage du catalyseur, une vanne principale dont un organe commandé est mobile entre une position de fermeture et une position d'ouverture qui obture ou non le circuit d'injection d'air respectivement, et un clapet anti-retour qui empêche les gaz d'échappement issus du moteur de circuler dans le circuit d'injection d'air,
et l'organe mobile est commandé de façon que, lors de la phase d'amorçage du catalyseur, il permette de faire varier le débit d'air injecté en amont du catalyseur pour optimiser la montée en température du catalyseur et la rapidité de son amorçage.

La présente invention vise à minimiser la durée de l'amorçage d'un catalyseur et la quantité des substances polluantes rejetées dans l'atmosphère.

Dans ce but, elle propose de piloter le débit d'air injecté par rapport à un paramètre représentatif de la température du catalyseur de façon telle que lorsque ce paramètre est inférieur à une première valeur prédéterminée représentative d'une première valeur de la température du catalyseur, le débit d'air injecté correspond à un premier débit prédéterminé, et que, lorsque ce paramètre est supérieur à la première valeur prédéterminée, on augmente progressivement le débit d'air injecté jusqu'à un second débit d'air prédéterminé.

Selon d'autres caractéristiques de l'invention :
- le débit d'air injecté correspond au débit d'air minimal permettant d'oxyder le maximum de substances polluantes en fonction du niveau d'amorçage du catalyseur ;
- lorsque le paramètre représentatif de la température du catalyseur est supérieur à la première valeur prédéterminée, on augmente le débit de substances polluantes à oxyder de façon à accélérer la montée en température catalyseur ;
- la première valeur de la température du catalyseur correspond à la température à partir de laquelle le catalyseur peut traiter 50% d'au moins une substance polluante qui le traverse ;
- la phase d'amorçage est précédée d'une phase de préchauffe du catalyseur de façon à augmenter la rapidité de son amorçage ;
- la phase de préchauffe consiste au moins partiellement à injecter dans le catalyseur un débit d'air chauffé par des moyens de chauffage;
- la phase de préchauffe consiste à chauffer directement la structure du catalyseur, notamment par le passage d'un courant électrique.

L'invention propose un dispositif d'amorçage d'un catalyseur de traitement des gaz d'échappement d'un moteur à combustion, notamment d'un moteur d'un véhicule automobile, qui est agencé dans une tubulure d'échappement, du type qui débouche dans la tubulure d'échappement en amont du catalyseur et qui comporte un circuit d'injection d'air dans lequel sont agencés successivement une pompe à air qui est activée au début de la phase d'amorçage du catalyseur, une vanne principale dont un organe commandé est mobile entre une position de fermeture et une position d'ouverture qui obture ou non le circuit d'injection d'air respectivement, et un clapet anti-retour qui empêche les gaz d'échappement issus du moteur de circuler dans le circuit d'injection d'air, caractérisé en ce que l'organe mobile est commandé de façon que, lors de la phase d'amorçage du catalyseur, il permette de faire varier le débit d'air injecté en amont du catalyseur pour optimiser la montée en température du catalyseur et la rapidité de son amorçage.

Selon d'autres caractéristiques du dispositif :
- le circuit d'injection d'air comporte des moyens de dérivation qui permettent l'injection d'un premier débit d'air prédéterminé dans la tubulure d'échappement, lorsque l'organe mobile commandé obture le circuit d'injection d'air, de façon notamment à maintenir le catalyseur en milieu oxydant ;
- les moyens de dérivation consistent en un ajutage réalisé dans la vanne principale de façon que, en position de fermeture de l'organe mobile, elle soit traversée par le premier débit ;
- la vanne comporte des moyens qui commandent l'ouverture de la vanne, de façon à déterminer le débit d'air qui circule dans le circuit d'injection d'air en fonction d'au moins un paramètre d'échappement pour optimiser la montée en température du catalyseur ;
- ledit paramètre d'échappement est représentatif de la température du catalyseur ;
- ledit paramètre d'échappement est représentatif de la concentration des gaz d'échappement en au moins une substance polluante, telle que le monoxyde de carbone ;
- ledit paramètre d'échappement est représentatif du temps écoulé depuis la mise en fonctionnement du moteur ;
- l'organe mobile commandé comporte une membrane qui est mobile entre une position d'ouverture et une position de fermeture qui permet ou non la circulation de l'air dans le circuit d'injection, respectivement, et qui sépare une chambre de commande d'une chambre de passage qui est interposée dans le circuit d'injection, et les moyens de commande de la vanne commandent la position de la membrane de façon à faire varier progressivement le débit d'air qui s'écoule à travers la vanne principale, et ainsi le débit d'air injecté dans la tubulure d'échappement ;
- les moyens de commande exercent un effort de commande appliqué sur une première paroi de la membrane qui s'oppose à un effort d'ouverture qui est exercé sur une seconde paroi de la membrane par l'air fourni par la pompe ;
- les moyens de commande comportent un ressort de rappel qui exerce, sur la première paroi de la membrane, un premier effort qui s'oppose à l'ouverture de la membrane de la vanne ;
- les moyens de commande comportent un conduit de commande qui relie le collecteur d'admission du moteur à la chambre de commande de la vanne de façon que la pression de collecteur exerce un second effort, sur la première paroi de la membrane ;
- un dispositif de contrôle est agencé dans la conduite de commande de façon à contrôler l'égalisation de la pression de collecteur et la pression de la chambre de commande ;
- un dispositif de retardement est agencé dans la conduite de commande de façon à retarder l'égalisation de la pression de collecteur et la pression de la chambre de commande ;
- des moyens additionnels de chauffage sont agencés en amont du catalyseur de traitement.

D'autres caractéristiques et avantages de l'invention apparaîtront à la lecture de la description détaillée qui suit pour la compréhension de laquelle on se reportera aux dessins annexés parmi lesquels :
- la figure 1 représente schématiquement une tubulure d'échappement d'un moteur à combustion qui est équipée d'un catalyseur, ainsi que d'un dispositif d'amorçage du catalyseur réalisé selon l'état de la technique ;
- la figure 2 représente schématiquement une tubulure d'échappement d'un moteur à combustion qui est équipée d'un catalyseur ainsi que d'un dispositif d'amorçage du catalyseur réalisé selon les enseignements de l'invention.

Dans la suite de la description les éléments identiques ou similaires seront désignés par les mêmes chiffres de référence.

De plus, une orientation amont aval sera utilisée, conformément à la direction générale de l'écoulement des gaz dans la tubulure d'échappement et dans le dispositif d'amorçage du catalyseur.

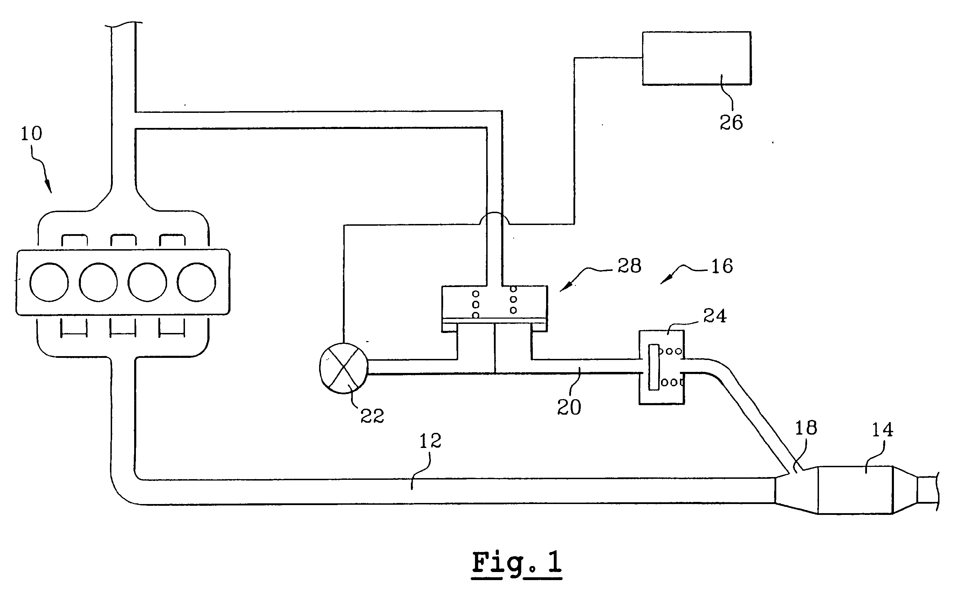

La figure 1 représente un moteur à combustion 10 d'un véhicule automobile, ainsi que sa tubulure d'échappement 12.

La tubulure d'échappement 12 est équipée d'un catalyseur de traitement 14 des gaz d'échappement du moteur 10 qui permet de transformer des substances polluantes, telles que du monoxyde de carbone, contenues dans les gaz d'échappement, en substances non polluantes, telles que de l'eau et du dioxyde de carbone.

Un dispositif d'injection d'air aussi appelé dispositif d'amorçage 16 du catalyseur 14 de traitement des gaz, débouche dans la tubulure d'échappement 12 en un point d'injection 18 situé en amont du catalyseur 14.

Le dispositif d'amorçage 16 permet d'injecter de l'air en amont du catalyseur 14 de façon à fournir suffisamment de substances oxydantes pour oxyder les substances polluantes des gaz d'échappement, telles que le monoxyde de carbone, pour accélérer l'augmentation de la température du catalyseur 14, et ainsi diminuer sa durée d'amorçage.

De manière connue, le dispositif d'amorçage 16 comporte un circuit 20 d'injection qui relie une pompe à air 22 au point d'injection 18.

La pompe à l'air 22 est généralement une pompe électrique pilotée par un dispositif électronique de commande 26. Lorsqu'elle est activée, elle fournit un débit d'air constant dans le circuit 20 d'injection.

Pour que les gaz d'échappement qui circulent dans la tubulure d'échappement 12 ne remontent pas dans le circuit 20 d'injection, un clapet anti-retour 24 est agencé à proximité du point d'injection 18.

Ainsi, la pompe 22 doit fournir de l'air sous une pression permettant l'ouverture du clapet anti-retour 24. Pour ce faire, l'effort exercé par l'air fourni par la pompe 22 doit être supérieur à la somme de l'effort exercé par le ressort tarage du clapet anti-retour 24 et de l'effort du à la pression des gaz d'échappement sur la partie aval du clapet 24.

Certains clapets anti-retour ne permettent pas de maîtriser la phase d'arrêt de la pompe 22. En effet, lors de cette phase transitoire, ils peuvent osciller et laisser remonter des gaz d'échappement dans le circuit 20 d'injection. Or un tel phénomène nuit au bon fonctionnement du dispositif.

Pour remédier à cet inconvénient, il est connu d'agencer une vanne d'arrêt 28 entre la pompe à l'air 22 et le clapet anti-retour 24. Ainsi, lorsque la pompe à air 22 est arrêtée, la vanne d'arrêt 28 est fermée de façon à empêcher la circulation de l'air, supprimant ainsi tout risque d'oscillation du clapet 24 et de remontée des gaz d'échappement dans le circuit 20 d'injection.

Cependant, un tel dispositif d'amorçage 16 ne permet pas de réduire la durée d'amorçage du catalyseur 14 de façon optimale.

En effet, soit la quantité d'air injecté est trop importante, par rapport à la quantité d'air qui réagit avec les substances polluantes, et par conséquent elle ralentit la montée en température du catalyseur 14, soit la quantité d'air injecté est trop faible et elle ne permet pas l'oxydation de la quantité maximale de monoxyde de carbone qui peut être traitée par le catalyseur 14.

Pour remédier à ces inconvénients, l'invention propose un procédé permettant d'optimiser la montée en température du catalyseur 14 et la quantité de substances polluantes rejetées vers l'atmosphère.

Le procédé selon l'invention propose de faire varier le débit d'air injecté dans la tubulure 12, de façon à optimiser la montée en température du catalyseur 14 et la rapidité de son amorçage.

On considère que le catalyseur 14 est amorcé lorsqu'il peut traiter la quasi-totalité du monoxyde de carbone qui le traverse, c'est-à-dire que son efficacité est proche 100%.

L'efficacité du catalyseur 14 dépend de sa température.

Le catalyseur 14 est amorcé lorsque sa température est supérieure à sa température d'amorçage qui peut-être de l'ordre de 500 °C.

Le débit d'air injecté selon l'invention correspond au débit d'air minimal permettant d'oxyder le maximum de substances polluantes en fonction de l'efficacité du catalyseur 14, de façon à optimiser sa montée en température.

Le chauffage du catalyseur 14 a deux causes.

La première provient des gaz d'échappement chauds qui le traversent et dont les échanges thermiques avec sa structure provoquent l'augmentation de sa température.

La seconde origine du chauffage du catalyseur 14 est la réaction exothermique d'oxydation du monoxyde de carbone qui se produit lorsque la température du catalyseur 14 est supérieure à une température de seuil qui peut être de l'ordre de 200 °C.

La température de seuil correspond sensiblement à la température à partir de laquelle le catalyseur 14 peut traiter 50% du monoxyde de carbone qui le traverse.

Ainsi, l'amorçage du catalyseur 14 se décompose globalement en deux phases.

Au cours d'une première phase, le chauffage du catalyseur 14 est dû uniquement à la première cause. Cette phase est appelée phase de réchauffage du catalyseur 14.

Au cours de cette phase, l'efficacité du catalyseur 14 est assez faible.

Ainsi, une partie importante des substances polluantes produites par le moteur 10 traversent le catalyseur 14 sans y être traitées est rejetée dans l'atmosphère.

Une seconde phase est initiée lorsque le catalyseur 14 atteint la température de seuil. À partir de cet instant, la réaction d'oxydation du monoxyde de carbone devient exothermique et participe à l'augmentation de la température du catalyseur 14 qui provoque une augmentation de l'efficacité de traitement du catalyseur 14. Cette phase est appelée phase de chauffage chimique.

Ainsi, le procédé propose que, lorsque la température du catalyseur 14 est inférieure à la température de seuil, le débit d'air injecté corresponde à un premier débit prédéterminé qui permet d'oxyder la quantité maximale de substances polluantes correspondant à l'efficacité du catalyseur 14 lorsqu'il a atteint sa température de seuil.

Le premier débit prédéterminé correspond ainsi au débit d'air minimal permettant de maintenir le catalyseur 14 en milieu oxydant, durant toute la durée de la phase de réchauffage.

La montée en température du catalyseur 14 est optimale, car le débit d'air est minimum, de façon à réduire les pertes thermiques, tout en permettant de traiter le maximum de substances polluantes.

Lorsque le catalyseur 14 atteint la température de seuil, la réaction d'oxydation des substances polluantes dégage de la chaleur qui permet d'augmenter la vitesse de montée en température du catalyseur 14 et ainsi, permet d'augmenter l'efficacité du catalyseur 14. La quantité de substances polluantes que le catalyseur 14 peut traiter est donc plus importante, le procédé selon l'invention augmente progressivement le débit d'air injecté jusqu'à un second débit prédéterminé.

L'augmentation du débit d'air injecté correspond à l'augmentation de la quantité d'oxygène nécessaire à oxyder la quantité maximale de substances polluantes correspondant à l'efficacité du catalyseur 14.

Le second débit d'air prédéterminé correspond au débit d'air nécessaire pour oxyder la quantité maximale de substances polluantes lorsque le catalyseur 14 est amorcé.

De façon à augmenter encore la rapidité d'amorçage du catalyseur 14, il est avantageux (lors de la phase de chauffage chimique) d'augmenter la quantité de monoxyde de carbone produite par le moteur 10, de façon à augmenter le chauffage chimique de la réaction d'oxydation.

Avantageusement, la phase d'amorçage est précédée d'une phase de préchauffe du catalyseur 14.

Ainsi, avant l'allumage du moteur 10, la pompe à air 22 est mise en fonctionnement, de façon injecter de l'air en amont du catalyseur 14. De plus, un dispositif de chauffage 30 est interposé, par exemple dans le circuit d'injection 20 et de préférence à proximité du point d'injection 18, et il est activé pour chauffer l'air fourni par la pompe 22 avant son entrée dans le catalyseur 14.

Lors de la phase de réchauffage du catalyseur 14, le débit d'air qui traverse le dispositif de chauffage 30 est faible, ce qui permet une forte augmentation de sa température favorisant la montée en température du catalyseur 14.

La phase de préchauffe permet ainsi de réduire encore la durée d'amorçage du catalyseur 14.

La phase de préchauffe est par exemple initiée lorsque la clé de contact du véhicule est introduite dans la serrure de démarrage. Elle peut durer un temps prédéterminé ou se poursuivre jusqu'à ce que le moteur 10 soit mis en fonctionnement.

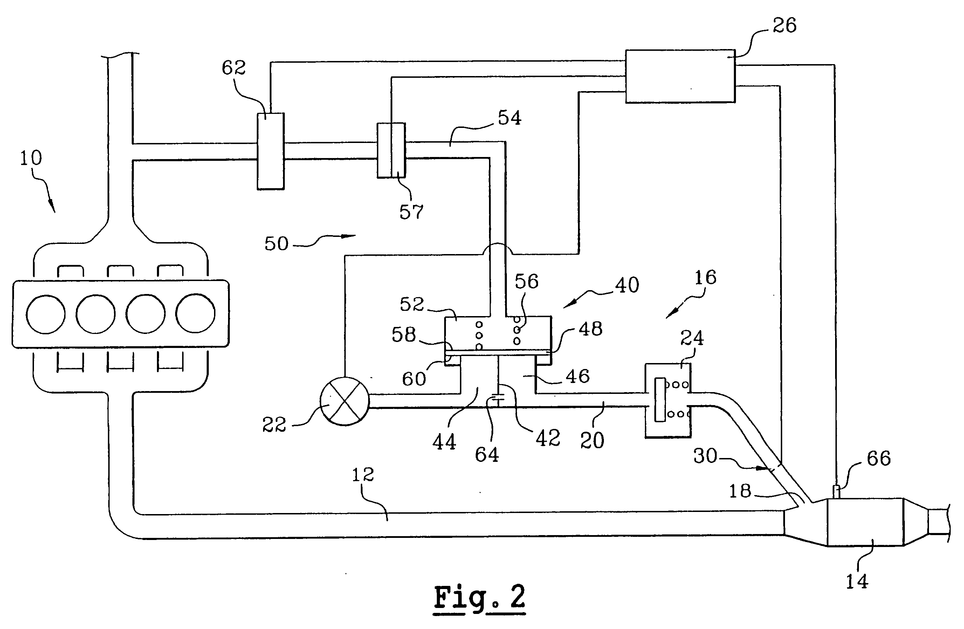

Pour mettre en oeuvre un tel procédé, l'invention propose aussi un dispositif d'amorçage 16 représenté à la figure 2.

Le dispositif d'amorçage 16 comporte, en plus de la pompe à air 22 et du clapet anti-retour 24, une vanne principale 40.

La vanne principale 40 comporte ici une paroi centrale 42 qui permet de la séparer en une chambre de passage amont 44 et une chambre de passage aval 46.

La vanne principale 40 comporte aussi une membrane 48 qui est mobile entre une position d'ouverture qui permet la circulation de l'air de la chambre de passage amont 44 à la chambre de passage aval 46, et une position de fermeture qui bloque la circulation de l'air à travers la vanne principale 40, de façon à empêcher la circulation de l'air dans le conduit d'injection 20.

La membrane 48 est commandée par des moyens de commande 50 qui permettent de faire varier progressivement le débit d'air qui s'écoule à travers la vanne principale 40.

Conformément à la figure 2, les moyens de commande 50 comportent une chambre de commande 52 qui est reliée à un conduit de commande 54.

Les moyens de commande 50 permettent d'appliquer, sur une première paroi 58 de la membrane 48, un effort qui s'oppose à un effort d'ouverture qui est appliqué, sur une seconde paroi 60 de la membrane 48, par l'air fournit par la pompe 22.

L'effort qui s'oppose à l'effort d'ouverture de la membrane 48 se décompose en un premier effort produit par un ressort de rappel 56 et en un second effort produit par la pression d'un gaz dans la chambre de commande 52.

Ici, la chambre de commande 52 est reliée au collecteur d'admission du moteur 10 par le conduit de commande 54. Ainsi, la pression dans la chambre de commande 52 dépend de la pression du collecteur d'admission.

De façon à maîtriser le débit d'air injecté dans la tubulure 12, un dispositif de contrôle 57 est interposé dans la conduite de commande 54. Le dispositif de contrôle 57 permet de contrôler l'égalisation de la pression de collecteur et de la pression de la chambre de commande 52.

Ici, le dispositif de contrôle 57 consiste en une restriction de la section de passage du gaz.

La restriction produit une perte de charge qui permet que l'égalisation de la pression de collecteur et de la pression de la chambre de commande 52 soit progressive. De plus, le dispositif de contrôle 57 permet de filtrer les variations de pression des gaz dans le collecteur d'admission, de façon que la variation de la pression dans la chambre de commande 52 soit constante.

Les moyens de commande 50 peuvent être un dispositif électromagnétique, non représenté, qui est constitué d'une bobine inductrice et d'un élément mobile. Ainsi, la position de l'élément mobile est dépend du courant qui circule dans la bobine et dont l'intensité est gérée par le dispositif électronique de commande 26 en fonction de l'efficacité du catalyseur 14, de façon à ajuster le débit d'air injecté dans la tubulure d'échappement 12 en fonction de l'efficacité du catalyseur 14.

Avantageusement, le dispositif de contrôle 57 est réglable, c'est-à-dire que la section de passage du gaz peut varier. Ainsi, la section de passage peut être déterminée, par exemple en fonction de la température du catalyseur 14.

Un dispositif de retardement 62 peut aussi être agencé en amont du dispositif de contrôle 57 de façon à retarder le début de l'égalisation de la pression de collecteur et de la pression de la chambre de commande 52. Le dispositif de contrôle 57 peut être une vanne dont l'ouverture est commandée par le dispositif électronique de commande 26.

On a vu précédemment que l'amorçage du catalyseur 14 se décompose en deux phases.

Au cours de la phase de réchauffage, un faible débit d'air est suffisant pour maintenir le catalyseur 14 en milieu oxydant. Ainsi, l'invention propose que le dispositif d'amorçage 16 comporte des moyens de dérivation qui permettent la circulation d'un premier débit d'air dans la tubulure d'échappement, lorsque la vanne principale 40 est fermée.

Ici, les moyens de dérivation sont un ajutage 64 réalisé dans la paroi centrale 42 de la vanne principale 40. Le diamètre de l'ajutage 64 permettant le passage du premier débit air. Les moyens de dérivation peuvent aussi consistés en une conduite secondaire qui relie la première et la seconde chambre de passage 44, 46 et dont la section permet de passage du premier débit d'air.

Avantageusement, le diamètre de l'ajutage 64 est variable, de façon à laisser circuler dans le circuit d'injection 20, le débit d'air minimal permettant d'oxyder le maximum de substances polluantes en fonction de l'efficacité du catalyseur 14.

Au cours de la seconde phase, l'efficacité du catalyseur 14 augmentant, il faut augmenter progressivement le débit d'air injecté dans la tubulure d'échappement 12 de façon qu'il soit toujours en milieu oxydant. Pour ce faire, les moyens de commande 50 permettent l'ouverture progressive de la vanne principale 40.

Les dimensionnements du ressort de rappel 56, ainsi que du dispositif de contrôle 57, sont réalisés pour que les moyens de commande 50 maintiennent la membrane mobile 48 en position de fermeture lors de la première phase et permettent son ouverture progressive lors de la seconde phase.

Lors du démarrage du moteur, la pression dans la chambre de commande 52 est égale à la pression atmosphérique. La pression du collecteur d'admission passe quant à elle de la pression atmosphérique à une pression inférieure. En effet, cette dépression est due à l'aspiration de l'air par les pistons à travers le papillon des gaz, non représenté.

Le dimensionnement du dispositif de contrôle 57 permet que l'égalisation de la pression du collecteur d'admission et la pression de la chambre de commande 52 soit réalisée progressivement. La durée de l'égalisation des pressions dépend principalement de la section de passage des gaz à travers le dispositif de contrôle 57.

La section de passage des gaz à travers le dispositif de contrôle 57 et le tarage du ressort de rappel 56 sont déterminés pour que la somme des pressions exercées sur la première paroi 58 par le ressort de rappel 56 et par la pression du gaz dans la chambre de commande 52 soit égale à la somme des pressions qui s'exercent sur la seconde paroi 60 et qui est produite par l'air situé dans la première et la seconde chambre de passage 44, 46 à la fin de la phase de réchauffage du catalyseur 14, c'est-à-dire lorsqu'il atteint sa température de seuil.

Ensuite, la somme des pressions exercées sur la première paroi 58 par le ressort de rappel 56 et par la pression du gaz dans la chambre de commande 52 doit continuer à diminuer pour permettre l'ouverture progressive de la membrane mobile 48 et l'augmentation du débit d'air injecté en amont du catalyseur 14.

Le débit d'air qui circule dans le circuit d'injection 20 peut être déterminé en fonction d'un "paramètre d'échappement" de façon à optimiser la montée en température du catalyseur 14.

Le paramètre d'échappement peut être représentatif de la température du catalyseur 14 et/ou de la concentration des gaz d'échappement en substances polluantes telles que le monoxyde de carbone. Une sonde de température et/ou concentration 66 peut être insérée dans le catalyseur 14 de façon à fournir au dispositif électronique de commande 26 une valeur représentative de la température du catalyseur 14 et/ou de la concentration des gaz d'échappement en substances polluantes. Le dispositif 26 peut alors commander les moyens de commande 50, tels que le dispositif de contrôle 57 ou le dispositif de retardement 62, par exemple pour accélérer ou retarder la vitesse d'ouverture de la membrane mobile 48.

Le paramètre d'échappement peut être représentatif du temps écoulé depuis la mise en fonctionnement du moteur 10.

Le dispositif électronique 26 peut alors commander les moyens de commande 50 pour que le début de l'ouverture de la membrane mobile 48 soit réalisé après l'écoulement d'une première durée prédéterminée, et pour que la fin de l'ouverture de la membrane mobile soit réalisée après l'écoulement d'une seconde durée prédéterminée.

Au cours de la seconde phase, le dispositif électronique de commande 26 peut commander l'injection de carburant dans les cylindres du moteur 10 de façon à augmenter la quantité de monoxyde de carbone produite, puis évacuée dans la tubulure d'échappement 12 de façon à augmenter le chauffage du chimique catalyseur 14 et à diminuer sa durée d'amorçage.

Lorsque le dispositif d'amorçage 16 comporte un dispositif de retardement 62, le tarage du ressort de rappel 57 peut être réalisé de façon que la somme des pressions exercées sur la première paroi 58 soit égale à la somme des pressions qui s'exercent sur la seconde paroi 60, lorsque la chambre de commande 52 est à la pression atmosphérique.

En effet, dans ce cas le dispositif de retardement 62 obture le conduit de commande 54 et lors du démarrage du moteur 10, la pression dans la chambre de commande 52 est alors constante et égale à la pression atmosphérique.

Lorsque le catalyseur 14 atteint sa température de seuil, le dispositif électronique 26 commande l'ouverture du dispositif de retardement 62 qui permet alors l'égalisation de la pression de la chambre de commande 52 à la pression du collecteur et l'ouverture progressive de la vanne principale 40.

Un tel dispositif d'amorçage 16 est économique et simple à mettre en oeuvre.

## Revendications

1. Procédé d'amorçage d'un catalyseur (14) de traitement des gaz d'échappement d'un moteur (10) à combustion, notamment d'un moteur d'un véhicule automobile, du type qui comporte une phase d'amorçage qui est activée lors de la mise en fonctionnement du moteur (10) et qui consiste à injecter un débit d'air prédéterminé en amont du catalyseur (14), de façon à le maintenir en milieu oxydant pour favoriser notamment des réactions d'oxydation exothermiques de substances polluantes telles que le monoxyde de carbone, le débit d'air prédéterminé correspondant au débit d'air minimal permettant d'oxyder le maximum de substances polluantes en fonction du niveau d'amorçage du catalyseur (14), du type dans lequel, au cours de la phase d'amorçage, on fait varier le débit d'air prédéterminé de façon à optimiser la montée en température du catalyseur (14) et la rapidité de son amorçage, pour diminuer la quantité de substances polluantes rejetées dans l'atmosphère,
**caractérisé en ce que**, lorsqu'un paramètre représentatif de la température du catalyseur (14) est inférieur à une première valeur prédéterminée représentative d'une première valeur de la température du catalyseur (14), le débit d'air injecté correspond à un premier débit prédéterminé, et **en ce que**, lorsque ledit paramètre est supérieur à la première valeur prédéterminée, on augmente progressivement le débit d'air injecté jusqu'à un second débit prédéterminé.

2. Procédé d'amorçage selon la revendication précédente, **caractérisé en ce que** lorsque le paramètre représentatif de la température du catalyseur (14) est supérieur à la première valeur prédéterminée, on augmente le débit de substances polluantes à oxyder de façon à accélérer la montée en température du catalyseur (14).

3. Procédé d'amorçage selon l'une quelconque des revendications précédentes, **caractérisé en ce que** la première valeur de la température du catalyseur (14) correspond à la température à partir de laquelle le catalyseur (14) peut traiter 50% d'au moins une substance polluante qui le traverse.

4. Procédé selon l'une quelconque des revendications précédentes, **caractérisé en ce que** la phase d'amorçage est précédée d'une phase de préchauffe du catalyseur (14) de façon à augmenter la rapidité de son amorçage.

5. Procédé selon l'une quelconque des revendications précédentes, **caractérisé en ce que** la phase de préchauffe consiste au moins partiellement à injecter dans le catalyseur (14) un débit d'air chauffé par des moyens de chauffage.

6. Procédé selon l'une des revendications 4 ou 5, **caractérisé en ce que** la phase de préchauffe consiste à chauffer directement la structure du catalyseur (14), notamment par le passage d'un courant électrique.

7. Dispositif d'amorçage d'un catalyseur (14) pour la mise en oeuvre du procédé selon l'une quelconque des revendications précédentes, du type qui est agencé dans une tubulure d'échappement (12), qui débouche dans la tubulure d'échappement (12) en amont du catalyseur (14) et qui comporte un circuit (20) d'injection d'air dans lequel sont agencés successivement une pompe à air (22) qui est activée au début de la phase d'amorçage du catalyseur (14), une vanne principale (40) dont un organe commandé est mobile entre une position de fermeture et une position d'ouverture qui obture ou non le circuit (20) d'injection d'air respectivement, et un clapet anti-retour (24) qui empêche les gaz d'échappement issus du moteur (10) de circuler dans le circuit (20) d'injection d'air, avec des moyens qui commandent l'organe mobile en fonction de l'évolution de la température du catalyseur (14) par rapport à des valeurs prédéterminées,
**caractérisé en ce que**, lorsqu'un paramètre représentatif de la température du catalyseur (14) est inférieur à une première valeur prédéterminée représentative d'une première valeur de la température du catalyseur (14), le débit d'air injecté correspond à un premier débit prédéterminé, et **en ce que**, lorsque ledit paramètre est supérieur à la première valeur prédéterminée, on augmente progressivement le débit d'air injecté jusqu'à un second débit prédéterminé.

8. Dispositif d'amorçage selon la revendication précédente, **caractérisé en ce que** le circuit (20) d'injection d'air comporte des moyens de dérivation qui permettent l'injection d'un premier débit d'air prédéterminé dans la tubulure d'échappement (12), lorsque l'organe mobile commandé obture le circuit (20) d'injection d'air, de façon notamment à maintenir le catalyseur (14) en milieu oxydant.

9. Dispositif d'amorçage selon la revendication précédente, **caractérisé en ce que** les moyens de dérivation consistent en un ajutage (64) réalisé dans la vanne principale (40) de façon que, en position de fermeture de l'organe mobile, elle soit traversée par le premier débit.

10. Dispositif d'amorçage selon l'une quelconque des revendications 7 à 9, **caractérisé en ce que** la vanne (40) comporte des moyens (50) qui commandent l'ouverture de la vanne (40), de façon à déterminer le débit d'air qui circule dans le circuit (20) d'injection d'air en fonction d'au moins un paramètre d'échappement pour optimiser la montée en température du catalyseur (14).

11. Dispositif d'amorçage selon la revendication précédente, **caractérisé en ce que** ledit paramètre d'échappement est représentatif de la température du catalyseur (14).

12. Dispositif d'amorçage selon l'une des revendications 10 ou 11, **caractérisé en ce que** ledit paramètre d'échappement est représentatif de la concentration des gaz d'échappement en au moins une substance polluante, telle que le monoxyde de carbone.

13. Dispositif d'amorçage selon l'une quelconque de revendications 10 à 12, **caractérisé en ce que** ledit paramètre d'échappement est représentatif du temps écoulé depuis la mise en fonctionnement du moteur (10).

14. Dispositif d'amorçage selon l'une quelconque des revendications 7 à 13, **caractérisé en ce que** l'organe mobile commandé comporte une membrane (48) qui est mobile entre une position d'ouverture et une position de fermeture qui permet ou non la circulation de l'air dans le circuit (20) d'injection, respectivement, et qui sépare une chambre de commande (52) d'au moins une chambre de passage (44, 46) qui est interposée dans le circuit d'injection (20), et **en ce que** les moyens de commande (50) de la vanne (40) commandent la position de la membrane (48) de façon à faire varier progressivement le débit d'air qui s'écoule à travers la vanne principale (40), et ainsi le débit d'air injecté dans la tubulure d'échappement (12).

15. Dispositif d'amorçage selon la revendication précédente, **caractérisé en ce que** les moyens de commande exercent un effort de commande appliqué sur une première paroi (58) de la membrane (48) qui s'oppose à un effort d'ouverture qui est exercé sur une seconde paroi (60) de la membrane (48) par l'air fourni par la pompe (22).

16. Dispositif d'amorçage selon la revendication précédente, **caractérisé en ce que** les moyens de commande (50) comportent un ressort de rappel (56) qui exerce, sur la première paroi (58) de la membrane (48), un premier effort qui s'oppose à l'ouverture de la membrane (48) de la vanne (40).

17. Dispositif d'amorçage selon l'une des revendications 15 ou 16, **caractérisé en ce que** les moyens de commande (50) comportent un conduit (54) de commande qui relie le collecteur d'admission du moteur (10) à la chambre de commande (52) de la vanne (40) de façon que la pression de collecteur exerce un second effort, sur la première paroi (58) de la membrane (48).

18. Dispositif d'amorçage selon la revendication précédente, **caractérisé en ce qu'**un dispositif de contrôle (57) est agencé dans le conduit de commande (54) de façon à contrôler l'égalisation de la pression de collecteur et la pression de la chambre de commande (52).

19. Dispositif d'amorçage selon l'une des revendications 17 ou 18, **caractérisé en ce qu'**un dispositif de retardement (62) est agencé dans la conduite de commande (54) de façon à retarder l'égalisation de la pression de collecteur et la pression de la chambre de commande (52).

20. Dispositif d'amorçage selon l'une quelconque des revendications 7 à 19, **caractérisé en ce que** des moyens additionnels de chauffage sont agencés en amont du catalyseur (14) de traitement.

## Claims

1. Method for priming a catalyst (14) for treating the exhaust gases of an internal combustion engine (10) particularly an engine of a motor vehicle, of the type comprising a priming phase which is activated when the engine is started (10) and which consists in injecting a predefined air flow rate upstream of the catalyst (14), in order to maintain it in oxidizing medium particularly to favour exothermic oxidation reactions of pollutant substances such as carbon monoxide, the predefined air flow rate corresponding to the minimum air flow rate for oxidizing the maximum of pollutant substances according to the level of priming of the catalyst (14), of the type in which, during the priming phase, the predefined air flow rate is varied in order to optimize the temperature rise of the catalyst (14) and the speed of its priming, to decrease the quantity of pollutant substances released into the atmosphere,
**characterized in that**, when a representative parameter of the catalyst (14) temperature is lower than a first predefined value representative of a first value of the catalyst (14) temperature, the injected air flow rate corresponds to a first predefined flow rate, and **in that**, when the said parameter is higher than the first predefined value, the injected air flow rate is progressively increased up to a second predefined flow rate.

2. Priming method according to the preceding claim, **characterized in that** when the representative parameter of the catalyst (14) temperature is higher than the first predefined value, the flow rate of pollutant substances to be oxidized is increased in order to accelerate the temperature rise of the catalyst (14).

3. Priming method according to any one of the preceding claims, **characterized in that** the first value of the catalyst (14) temperature corresponds to the temperature above which the catalyst (14) can treat at least 50% of a pollutant substance passing through it.

4. Method according to any one of the preceding claims, **characterized in that** the priming phase is preceded by a catalyst (14) preheating phase in order to increase the speed of its priming.

5. Method according to any one of the preceding claims, **characterized in that** the preheating phase consists in at least partially injecting, into the catalyst (14), an air flow heated by heating means.

6. Method according to either of Claims 4 and 5, **characterized in that** the preheating phase consists in directly heating the catalyst (14) structure, particularly by the passage of an electric current.

7. Device for priming a catalyst (14) for implementing the method according to any one of the preceding claims, of the type which is arranged in an exhaust manifold (12) which terminates in the exhaust manifold (12) upstream of the catalyst (14) and which comprises an air injection circuit (20) in which are arranged in succession an air pump (22) which is activated at the start of the catalyst (14) priming phase, a main valve (40) of which a controlled member moves between a closed position and an open position which shuts or opens the air injection circuit (20) respectively, and a nonreturn valve (24) which prevents the exhaust gases issuing from the engine (10) from flowing into the air injection circuit (20), with means which control the mobile member according to the variation in the catalyst (14) temperature from predefined values,
**characterized in that**, when a representative parameter of the catalyst (14) temperature is lower than a first predefined value representative of a first value of the catalyst (14) temperature, the injected air flow rate corresponds to a first predefined flow rate, and **in that**, when the said parameter is higher than the first predefined value, the injected air flow rate is progressively increased up to a second predefined flow rate.

8. Priming device according to the preceding claim, **characterized in that** the air injection circuit (20) comprises bypass means for injecting a first predefined air flow rate into the exhaust manifold (12), when the controlled mobile member shuts off the air injection circuit (20), particularly in order to maintain the catalyst (14) in oxidizing medium.

9. Priming device according to the preceding claim, **characterized in that** the bypass means consist of a nozzle (64) made in the main valve (40) so that, in the closed position of the mobile member, it is traversed by the first flow rate.

10. Priming device according to any one of Claims 7 to 9, **characterized in that** the valve (40) comprises means (50) for controlling the opening of the valve (40), in order to determine the air flow rate flowing in the air injection circuit (20) according to at least one exhaust parameter for optimizing the temperature rise of the catalyst (14).

11. Priming device according to the preceding claim, **characterized in that** the said exhaust parameter is representative of the catalyst (14) temperature.

12. Priming device according to either of Claims 10 and 11, **characterized in that** the said exhaust parameter is representative of the concentration of a pollutant substance, such as carbon monoxide, in the exhaust gases.

13. Priming device according to any one of Claims 10 to 12, **characterized in that** the said exhaust parameter is representative of the time elapsed since the engine (10) was started.

14. Priming device according to any one of Claims 7 to 13, **characterized in that** the controlled mobile member comprises a diaphragm (48) which moves between an open position and a closed position for permitting or preventing the air flow in the injection circuit (20), respectively, and which separates a control chamber (52) from at least one passage chamber (44, 46) which is inserted into the injection circuit (20), and **in that** the control means (50) of the valve (40) control the position of the diaphragm (48) in order to progressively vary the flow rate of air flowing through the main valve (40), and thereby the air flow rate injected into the exhaust manifold (12).

15. Priming device according to the preceding claim, **characterized in that** the control means exert a control force applied to a first wall (58) of the diaphragm (48) which opposes an opening force exerted on a second wall (60) of the diaphragm (48) by the air supplied by the pump (22).

16. Priming device according to the preceding claim, **characterized in that** the control means (50) comprise a return spring (56) which exerts, on the first wall (58) of the diaphragm (48), a first force which opposes the opening of the diaphragm (48) of the valve (40).

17. Priming device according to either of Claims 15 and 16, **characterized in that** the control means (50) comprise a control line (54) connecting the intake manifold of the engine (10) to the control chamber (52) of the valve (40) so that the manifold pressure exerts a second force on the first wall (58) of the diaphragm (48).

18. Priming device according to the preceding claim, **characterized in that** a control device (57) is arranged in the control line (54) in order to control the balancing of the manifold pressure with the pressure of the control chamber (52).

19. Priming device according to either of Claims 17 and 18, **characterized in that** a delaying device (62) is arranged in the control line (54) in order to delay the balancing of the manifold pressure with the pressure of the control chamber (52).

20. Priming device according to any one of Claims 7 to 19, **characterized in that** additional heating means are arranged upstream of the treatment catalyst (14).

## Patentansprüche

1. Verfahren zum Aktivieren eines Katalysators (14) zur Behandlung der Abgase eines Verbrennungsmotors (10), insbesondere eines Kraftfahrzeugmotors, von der Art, die eine Aktivierungsphase aufweist, die beim Start des Motors (10) ausgelöst wird und darin besteht, eine vorbestimmte Luftmenge stromaufwärts vor dem Katalysator (14) einzublasen, damit er in einem oxidierenden Milieu gehalten wird, um insbesondere exotherme Oxidationsreaktionen von Schadstoffen wie Kohlenmonoxid zu begünstigen, wobei die vorbestimmte Luftmenge der Mindestluftmenge entspricht, die es ermöglicht, das Maximum an Schadstoffen in Abhängigkeit vom Aktivierungspegel des Katalysators (14) zu oxidieren, von der Art, bei der während der Aktivierungsphase die vorbestimmte Luftmenge so verändert wird, dass der Temperaturanstieg des Katalysators (14) und die Geschwindigkeit seiner Aktivierung optimiert werden, um die Menge der in die Luft abgegebenen Schadstoffe zu verringern,
**dadurch gekennzeichnet, dass**, wenn ein für die Temperatur des Katalysators (14) repräsentativer Parameter unter einem ersten vorbestimmten Wert liegt, der für einen ersten Wert der Temperatur des Katalysators (14) repräsentativ ist, die eingeblasene Luftmenge einer ersten vorbestimmten Menge entspricht, und dass, wenn der Parameter höher ist als der erste vorbestimmte Wert, die eingeblasene Luftmenge progressiv bis zu einer zweiten vorbestimmten Menge erhöht wird.

2. Aktivierungsverfahren nach dem vorhergehenden Anspruch, **dadurch gekennzeichnet, dass**, wenn der für die Temperatur des Katalysators (14) repräsentative Parameter höher ist als der erste vorbestimmte Wert, die Menge an zu oxidierenden Schadstoffen erhöht wird, um den Temperaturanstieg des Katalysators (14) zu beschleunigen.

3. Aktivierungsverfahren nach einem der vorhergehenden Ansprüche, **dadurch gekennzeichnet, dass** der erste Wert der Temperatur des Katalysators (14) der Temperatur entspricht, von der ausgehend der Katalysator (14) 50 % mindestens eines ihn durchquerenden Schadstoffs behandeln kann.

4. Aktivierungsverfahren nach einem der vorhergehenden Ansprüche, **dadurch gekennzeichnet, dass** vor der Aktivierungsphase eine Vorwärmphase des Katalysators (14) liegt, um die Geschwindigkeit seiner Aktivierung zu erhöhen.

5. Aktivierungsverfahren nach einem der vorhergehenden Ansprüche, **dadurch gekennzeichnet, dass** die Vorwärmphase zumindest teilweise darin besteht, in den Katalysator (14) eine Luftmenge einzublasen, die von Heizmitteln erwärmt wird.

6. Aktivierungsverfahren nach einem der Ansprüche 4 oder 5, **dadurch gekennzeichnet, dass** die Vorwärmphase darin besteht, die Struktur des Katalysators (14) insbesondere durch den Durchgang eines elektrischen Stroms direkt zu erwärmen.

7. Aktivierungsvorrichtung für einen Katalysator (14) zur Anwendung des Verfahrens nach einem der vorhergehenden Ansprüche, von der Art, die in einem Auspuffrohr (12) ausgebildet ist, die vor dem Katalysator (14) in das Auspuffrohr (12) mündet, und die eine Lufteinblasleitung (20) aufweist, in der nacheinander eine Luftpumpe (22), die zu Beginn der Aktivierungsphase des Katalysators (14) aktiviert wird, ein Hauptventil (40), von dem ein gesteuertes Organ zwischen einer Schließstellung und einer Öffnungsstellung beweglich ist, das die Lufteinblasleitung (20) verschließt bzw. nicht verschließt, und ein Rückschlagventil (24) angeordnet sind, das die vom Motor (10) stammenden Abgase daran hindert, in der Lufteinblasleitung (20) zu strömen, mit Mitteln, die das bewegliche Organ in Abhängigkeit von der Entwicklung der Temperatur des Katalysators (14) bezüglich vorbestimmter Werte steuern,
**dadurch gekennzeichnet, dass**, wenn ein für die Temperatur des Katalysators (14) repräsentativer Parameter niedriger als ein erster vorbestimmter Wert ist, der für einen ersten Wert der Temperatur des Katalysators (14) repräsentativ ist, die eingeblasene Luftmenge einer ersten vorbestimmten Luftmenge entspricht, und dass, wenn der Parameter höher ist als der erste vorbestimmte Wert, die eingeblasene Luftmenge progressiv bis zu einer zweiten vorbestimmten Menge erhöht wird.

8. Aktivierungsvorrichtung nach dem vorhergehenden Anspruch, **dadurch gekennzeichnet, dass** die Lufteinblasleitung (20) Abzweigungsmittel aufweist, die das Einblasen einer ersten vorbestimmten Luftmenge in das Auspuffrohr (12) erlauben, wenn das gesteuerte bewegliche Organ die Lufteinblasleitung (20) verschließt, insbesondere um den Katalysator (14) in einem oxidierenden Milieu zu halten.

9. Aktivierungsvorrichtung nach dem vorhergehenden Anspruch, **dadurch gekennzeichnet, dass** die Abzweigungsmittel aus einer Düse (64) bestehen, die im Hauptventil (40) so ausgebildet ist, dass sie in der Schließstellung des beweglichen Organs von der ersten Menge durchquert wird.

10. Aktivierungsvorrichtung nach einem der Ansprüche 7 bis 9, **dadurch gekennzeichnet, dass** das Ventil (40) Mittel (50) aufweist, die das Öffnen des Ventils (40) steuern, um die in der Lufteinblasleitung (20) strömende Luftmenge in Abhängigkeit von mindestens einem Abgasparameter zu bestimmen, um den Temperaturanstieg des Katalysators (14) zu optimieren.

11. Aktivierungsvorrichtung nach dem vorhergehenden Anspruch, **dadurch gekennzeichnet, dass** der Abgasparameter für die Temperatur des Katalysators (14) repräsentativ ist.

12. Aktivierungsvorrichtung nach einem der Ansprüche 10 oder 11, **dadurch gekennzeichnet, dass** der Abgasparameter für die Konzentration mindestens eines Schadstoffs, wie Kohlenmonoxid, in den Abgasen repräsentativ ist.

13. Aktivierungsvorrichtung nach einem der Ansprüche 10 bis 12, **dadurch gekennzeichnet, dass** der Abgasparameter für die seit dem Start des Motors (10) vergangene Zeit repräsentativ ist.

14. Aktivierungsvorrichtung nach einem der Ansprüche 7 bis 13, **dadurch gekennzeichnet, dass** das gesteuerte mobile Organ eine Membran (48) aufweist, die zwischen einer Öffnungsstellung und einer Schließstellung beweglich ist, die das Strömen von Luft in der Einblasleitung (20) erlaubt bzw. nicht erlaubt, und die eine Steuerkammer (52) von mindestens einer Durchlasskammer (44, 46) trennt, die in die Einblasleitung (20) eingefügt ist, und dass die Steuermittel (50) des Ventils (40) die Stellung der Membran (48) so steuern, dass die durch das Hauptventil (40) strömende Luftmenge, und somit die in das Auspuffrohr (12) eingeblasene Luftmenge, progressiv verändert wird.

15. Aktivierungsvorrichtung nach dem vorhergehenden Anspruch, **dadurch gekennzeichnet, dass** die Steuermittel eine auf eine erste Wand (58) der Membran (48) angewendete Steuerkraft ausüben, die einer auf eine zweite Wand (60) der Membran (48) durch die von der Pumpe (22) gelieferte Luft ausgeübten Öffnungskraft entgegenwirkt.

16. Aktivierungsvorrichtung nach dem vorhergehenden Anspruch, **dadurch gekennzeichnet, dass** die Steuermittel (50) eine Rückstellfeder (56) aufweisen, die auf die erste Wand (58) der Membran (48) eine erste Kraft ausübt, die der Öffnung der Membran (48) des Ventils (40) entgegenwirkt.

17. Aktivierungsvorrichtung nach einem der Ansprüche 15 oder 16, **dadurch gekennzeichnet, dass** die Steuermittel (50) eine Steuerleitung (54) aufweisen, die den Ansaugkrümmer des Motors (10) mit der Steuerkammer (52) des Ventils (40) verbindet, damit der Krümmerdruck eine zweite Kraft auf die erste Wand (58) der Membran (48) ausübt.

18. Aktivierungsvorrichtung nach dem vorhergehenden Anspruch, **dadurch gekennzeichnet, dass** eine Kontrollvorrichtung (57) in der Steuerleitung (54) angeordnet ist, um den Ausgleich des Krümmerdrucks und des Drucks der Steuerkammer (52) zu überwachen.

19. Aktivierungsvorrichtung nach einem der Ansprüche 17 oder 18, **dadurch gekennzeichnet, dass** eine Verzögerungsvorrichtung (62) in der Steuerleitung (54) so angeordnet ist, dass sie den Ausgleich des Krümmerdrucks und des Drucks der Steuerkammer (52) verzögert.

20. Aktivierungsvorrichtung nach einem der Ansprüche 7 bis 19, **dadurch gekennzeichnet, dass** vor dem Behandlungs-Katalysator (14) zusätzliche Heizmittel angeordnet sind.
